# EUROPEAN PATENT SPECIFICATION

(11) **EP 1 886 090 B1**
(45) Date of publication and mention of the grant of the patent: **01.12.2021**
(21) Application number: 06747811.5
(22) Date of filing: 24.05.2006
(51) Int. Cl.: A01G 23/083, G01B 11/04

(54) **A TREE HARVESTER**
BAUM-ERNTEVORRICHTUNG
ABATTEUSE D'ARBRES

(30) Priority: 24.05.2005 SE 0501162
(43) Date of publication of application: 13.02.2008
(73) Proprietor: Sörvik, Bengt, 755 95 Uppsala (SE)
(72) Inventor: Sörvik, Bengt, 755 95 Uppsala (SE)
(74) Representative: Bjerkéns Patentbyrå KB (Gävle)
(86) International application number: PCT/SE2006/000617
(87) International publication number: WO 2006/126952

(56) References cited:
- WO-A1-00/79213
- WO-A1-02/13597
- WO-A1-02/15673
- WO-A1-02/45482
- WO-A1-87/04045
- WO-A1-2005/043983
- JP-A- 2005 027 509
- SE-C2- 518 240
- DEMEYERE M ET AL: "CYLINDRICAL PIECE MEASUREMENT THROUGH LASER TECHNOLOGY APPLICATION TO A NEW FOREST CALIPER", IMTC 2001. PROCEEDINGS OF THE 18TH. IEEE INSTRUMENTATION AND MEASUREMENT TECHNOLOGY CONFERENCE. BUDAPEST, HUNGARY, MAY 21 - 23, 2001; [IEEE INSTRUMENTATION AND MEASUREMENT TECHNOLOGY CONFERENCE. (IMTC):], NEW YORK, NY : IEEE, US, vol. CONF. 18, 21 May 2001 (2001-05-21), pages 222-227, XP001049117, DOI: 10.1109/IMTC.2001.928816 ISBN: 978-0-7803-6646-6
- DEMEYERE M. ET AL.: 'Cylindrical Piece Measurement through Laser Telemetry Application to a New Forest Caliper' IEEE INSTRUMENTATION AND MEASUREMENT, TECHNOLOGY CONFERENCE 21 May 2001 - 23 May 2001, pages 222 - 227, XP001049117
- None

## Description

### FIELD OF THE INVENTION AND PRIOR ART

The present invention relates to a tree harvester comprising a harvesting arrangement, which harvesting arrangement comprises gripping members for holding a tree trunk, a cutting device for cutting a tree trunk held by the gripping members into separate logs, and feeding means for feeding a tree trunk held by the gripping members forward in the longitudinal direction of the tree trunk past the cutting device so as to allow the cutting device to cut the tree trunk into separate logs.

A harvesting arrangement of a tree harvester normally comprises gripping members for holding a tree trunk, a cutting device for cutting the tree trunk, delimbing knives for removing branches from the tree trunk and feeding means for feeding the tree trunk held by the gripping members forward in the longitudinal direction of the tree trunk past the delimbing knives and the cutting device so as to allow the cutting device to cut the tree trunk into separate logs. The harvesting arrangement of a modern tree harvester is normally provided with mechanical measuring means for measuring the diameter and length of a log to be formed. The diameter of the log may for instance be computed from the pivot angle of the gripping members or the delimbing knives, and the length of the log may for instance be computed by a measuring wheel that rolls over the envelope surface of the tree trunk as the tree trunk is feed forward by the feeding means. These mechanical measuring means are rather inaccurate. In modern forestry there is an increased desire of providing more accurate measuring values related to the diameter, length and other characteristics of the logs produced by a tree harvester, for instance in order to better classify the produced logs and/or better determine an appropriate sales price for the produced logs. WO 2005/043983 A1 discloses a harvesting arrangement provided with two measurement means for repeatedly measuring the position of an outer surface of a tree stem in two points located on opposite sides of the tree stem, wherein the diameter of the tree stem is calculated based on the measuring values from said measurement means.

SE 518 240 C2 describes a tree harvester adapted to measure the diameter of a tree trunk.

### SUMMARY OF THE INVENTION

The object of the present invention is to provide a tree harvester offering improved possibilities of establishing measuring values related to the produced logs.

According to the invention, this object is achieved by a tree harvester having the features defined in claim 1.

The information as to the longitudinal curvature of a log may for instance be used in order to plan how to saw the log in a saw mill.

The processing means may also be adapted to establish information as to the diameter and/or ovality of said log at each of said locations based on said set of measuring values.

According to an embodiment of the invention, the measuring means is adapted to establish such sets of measuring values repeatedly as said log is fed forward by the feeding means and the processing means is adapted to establish the 3-dimensional shape of said log based on said sets of measuring values. Hereby, the external shape of the respective log may be described in a very accurate manner.

According to the invention, the measuring means comprises camera units, preferably in the form of CCD cameras, for establishing said set of measuring values, the camera units being arranged to view different parts of the envelope surface of said log at said locations. Hereby, the measuring values may be established in a non-contact manner without using any mechanical measuring members.

According to another embodiment of the invention, the harvesting arrangement comprises a measuring assembly for establishing measuring values related to an end surface of said log. The stored information as to the longitudinal curvature and/or diameter and/or ovality of the respective log may for instance be supplemented with information as to the diameter and/or ovality and/or wood surface profile of the log at the frontal end thereof based on the measuring values from said measuring assembly.

According to another embodiment of the invention, the harvesting arrangement comprises marking means for applying an identification marking on said log, by means of which the individual log is associatable to the stored information related to the log in question. Hereby, it will for instance be possible in a saw mill to identify an individual log and retrieve the stored information as to its longitudinal curvature, diameter, ovality etc.

Further advantages as well as advantageous features of the inventive tree harvester will appear from the following description and the dependent claims.

### BRIEF DESCRIPTION OF THE DRAWINGS

With reference to the appended drawings, a specific description of preferred embodiments of the invention cited as examples follows below. In the drawings:
- Fig 1: is a schematic lateral view of a tree harvester according to the present invention,
- Fig 2: is a schematic lateral view of the harvesting arrangement included in the tree harvester of Fig 1 as seen in its position for vertical holding and felling a tree,
- Fig 3: is a schematic rear view of the harvesting arrangement of Fig 2 as seen in the position when the tree trunk of a felled tree has been turned to a horizontal position,
- Fig 4: is a schematic lateral view of the harvesting arrangement of Fig 2 as seen in the position when the tree trunk of a felled tree has been turned to a horizontal position,
- Fig 5: is a perspective view of a log illustrating the principles of establishing information as to the longitudinal curvature of the log by means of a tree harvester according to the present invention,
- Fig 6: is a schematic cross-sectional view of a log illustrating the principles of establishing measuring values by means of a measuring assembly included in a tree harvester according to the invention,
- Fig 7: is a perspective view of a log provided with a marking on its frontal end surface,
- Fig 8: is a schematic perspective view of a tree harvester illustrating the use of a laser source for producing a longitudinal laser line on a tree trunk,
- Fig 9: is a schematic perspective view of a tree trunk illustrating the principles of establishing information as to the length of a log by means of a tree harvester according to an embodiment of the present invention,
- Fig 10: is a schematic perspective view of a tree trunk illustrating the principles of establishing information as to the length a log by means of a tree harvester according to an embodiment of the present invention, and
- Fig 11: is a schematic perspective view of a tree trunk illustrating the principles of establishing information as to the length and diameter of a log by means of a tree harvester according to an embodiment of the present invention.

### DETAILED DESCRIPTION OF PREFERRED EMBODIMENTS OF THE INVENTION

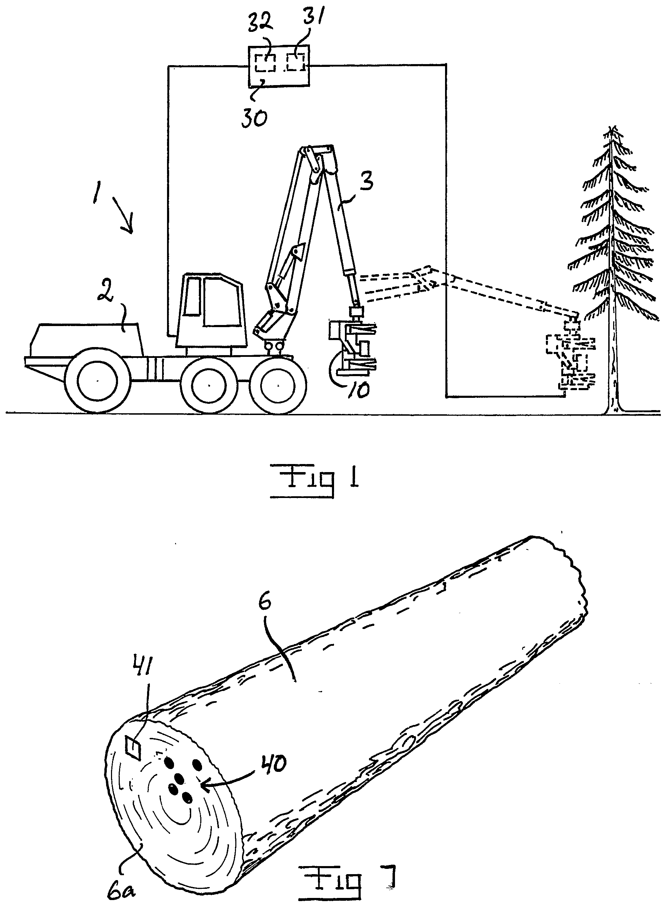

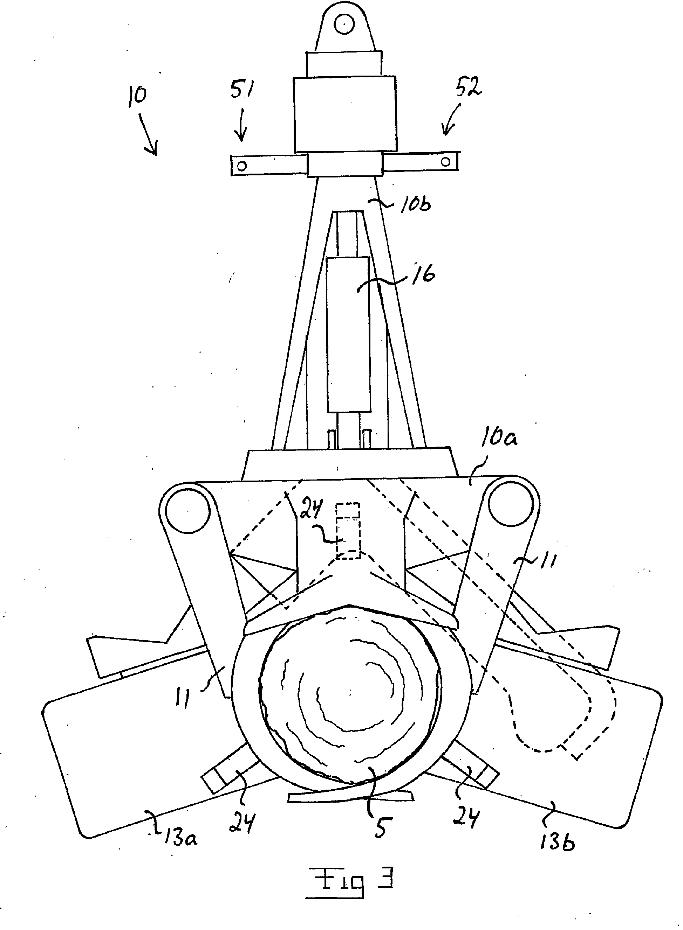

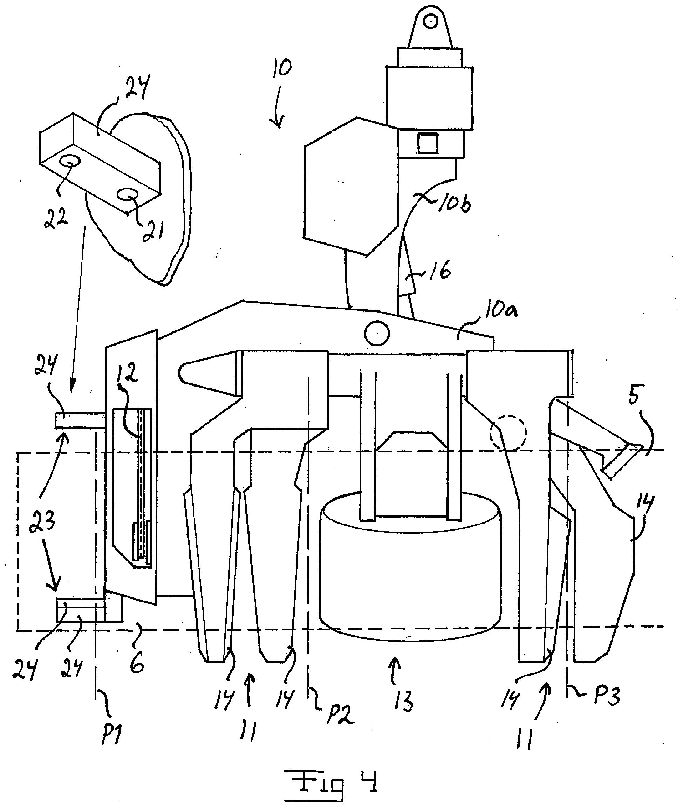

Fig 1 schematically illustrates a tree harvester 1 according to the invention. The tree harvester 1 comprises a vehicle 2 and a harvesting arrangement 10, in the form of a so-called harvester head, mounted thereon. The harvesting arrangement 10 is carried by the vehicle via a crane 3 and is here a so-called one grip harvesting arrangement, i.e. a harvesting arrangement adapted to grip a standing tree, cut it, lay the tree down to the position according to Figs 3 and 4 and then by means of feeding means drive the tree trunk through the harvesting arrangement while simultaneously delimbing the tree trunk. The tree trunk may be cross-cut into separate logs by means of a cutting device arranged in the harvesting arrangement. However, the invention is also applicable to a so-called full log handling, i.e. where the tree harvester is utilised to cut the tree off and fell it, but whereupon no cross-cutting of the tree trunk into smaller logs is carried out. In such a case, the expression "log" as used in the claims is intended to cover also the tree trunk as a whole.

The tree harvester 1 is provided with a computer arrangement, which is schematically indicated by the block 30.

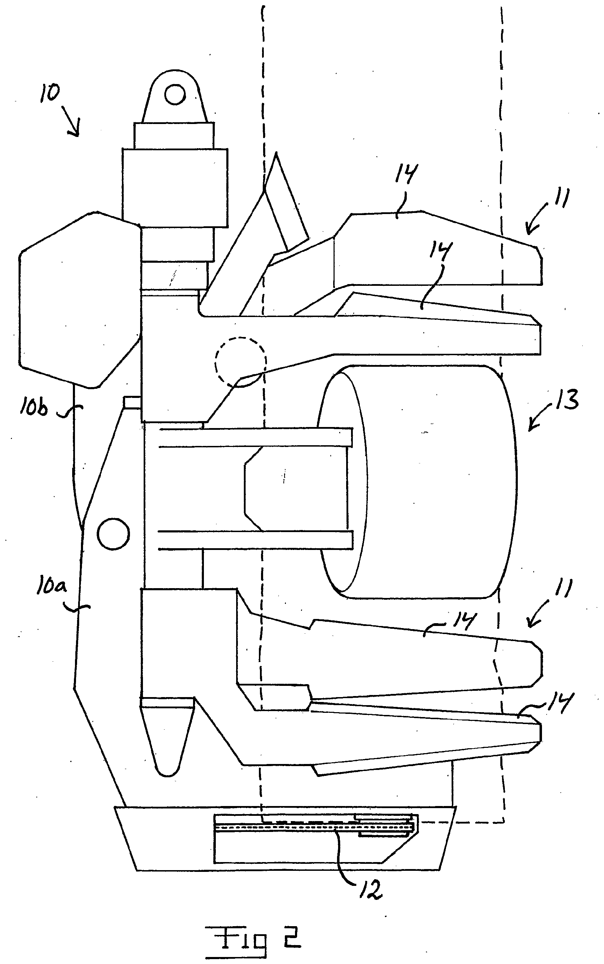

The harvesting arrangement 10 included in the tree harvester 1 of Fig 1 is illustrated in Figs 2-4. The harvesting arrangement 10 is here a so-called one grip harvesting arrangement, i.e. a harvesting arrangement adapted to grip a standing tree by gripping members 11, fell the tree by a cutting device 12, lay the tree down to the position according to Figs 3 and 4 and then by feeding means 13 drive the tree trunk 5 through the harvesting arrangement 10 while simultaneously delimbing the tree trunk by delimbing knives 14. In the illustrated example, the delimbing knives are arranged on the gripping members 11. In the illustrated example, the feeding means 13 of the harvesting arrangement comprises two rotatably driven feeding wheels 13a, 13b adapted to come into engagement with the tree trunk on opposite sides thereof. By means of the cutting device 12, the tree trunk may be cross-cut into separate logs.

In Fig 2, the harvesting arrangement 10 is shown with a cross-cut tree trunk 5 (indicated with broken lines) held by the gripping members 11 with the log extending in vertical direction. In Figs 3 and 4, the harvesting arrangement 10 and a tree trunk 5 held therein are shown after the harvesting arrangement has laid the tree trunk down to horizontal position. The manoeuvring from vertical to horizontal position is carried out by means of a power member 16 in the form of a hydraulic cylinder, which is adapted to turn the part 10a of the harvesting arrangement in which the log 5 is held in relation to the other part 10b of the harvesting arrangement that is attached to the crane 3 of the tree harvester. With respect to the parts described so far, the harvesting arrangement 10 is of conventional design.

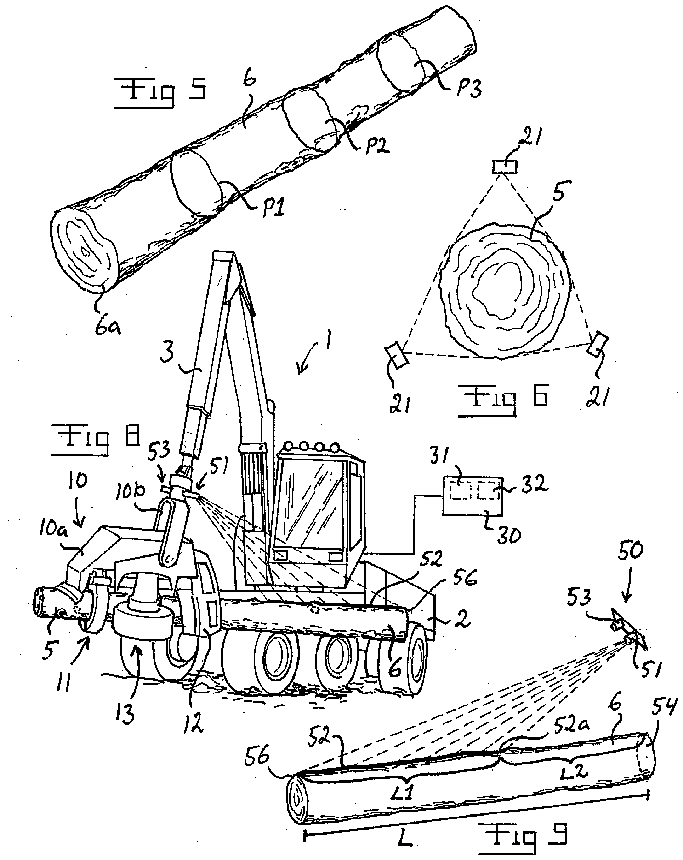

The inventive harvesting arrangement 10 comprises measuring means 21, 22 for establishing a set of measuring values related to the cross-sectional shape of a log 6 to be formed from a tree trunk 5 that is processed by means of the harvesting arrangement. Said set of measuring values comprises measuring values that are established simultaneously, i.e. at one and the same moment, by the measuring means and that are related to the cross-sectional shape of said log 6 at three or more different locations P1, P2, P3 spaced apart as seen in the longitudinal direction of the log. The mutual distance between said locations P1, P2, P3 should be given or established. Three such locations are indicated in Figs 4 and 5. Furthermore, the tree harvester 10 comprises processing means 31, schematically illustrated in Fig 1, for establishing information as to the longitudinal curvature of said log 6 based on said set of measuring values. The tree harvester 1 also comprises storing means 32, schematically illustrated in Fig 1, for storing the established information as to the longitudinal curvature of said log in a database. The processing means 31 and/or the storing means 32 may for instance be included in the above-indicated computer arrangement 30 of the tree harvester 1, as schematically indicated in Fig 1.

The processing means 31 may also be adapted to establish information as to the diameter and/or the ovality of said log at each of said locations P1, P2, P3 based on said set of measuring values. The storing means 32 is adapted to store such established information as to the diameter and/or ovality of said log in a database.

The measuring means 21, 22 is with advantage adapted to establish such sets of measuring values repeatedly as the tree trunk is fed forward by the feeding means 13 so as to allow the processing means 31 to establishing information as to the longitudinal curvature and/or diameter and/or ovality of a log 6 based on several sets of measuring values related to several different measuring points along the log. By combining the information established based on several different sets of measuring values, it will be possible to describe the longitudinal curvature and/or diameter and/or ovality along the entire log in a very accurate manner. The processing means 31 may for instance be adapted to establish information as to the bow height of a log 6 based on several such different sets of measuring values. Furthermore, it would be possible to describe the entire 3-dimensional shape of a log based on several such different sets of measuring values. The distance in the longitudinal direction of the log 6 between the different measuring points along the log should be measured and stored so as to make it possible to relate the established information to the respective position along the log.

The above-indicated measuring values are established by non-contact measuring, i.e. by means of measuring members capable of generating the desired measuring values without being in mechanical contact with the tree trunk.

The measuring means comprise camera units 21, preferably in the form of CCD cameras, for establishing said set of measuring values. One such camera unit 21 is schematically illustrated in the detail enlargement in Fig 4. The camera units 21 are arranged to view different parts of the envelope surface of a tree trunk 5 at the respective location P1, P2, P3 on the harvesting arrangement. Each camera unit 21 is with advantage associated with at least one laser source 22, preferably in the form of a line laser, which is arranged to produce a laser point or laser line on a part of the envelope surface of said tree trunk viewed by the associated camera unit 21. One such laser source 22 is schematically illustrated in the detail enlargement in Fig 4.

Each one of said locations P1, P2, P3 is suitably associated with its own measuring assembly 23, which implies that the measuring means comprises a number of measuring assemblies 23 corresponding to the number of measuring locations P1, P2, P3. The measuring assemblies 23 are spaced apart on the harvesting arrangement 10 as seen in the feeding direction of the feeding means 13. The harvesting arrangement 10 illustrated in Fig 4 is provided with three measuring assemblies 23. Only one of these measuring assemblies is schematically shown in Fig 4, whereas the intended locations P2, P3 along the harvesting arrangement for the other two measuring assemblies are indicated with broken lines. Each measuring assembly 23 comprises at least three camera units 21, such as CCD cameras, which are arranged to view mutually different parts of the envelope surface of a tree trunk 5 held by the gripping members of the harvesting arrangement as seen in the circumferential direction of the tree trunk. Furthermore, each measuring assembly 23 preferably comprises at least three laser sources 22, such as line lasers, for producing laser points or laser lines on mutually different parts of the envelope surface of said tree trunk 5 as seen in the circumferential direction thereof, each one of said camera units 21 of the measuring assembly 23 being arranged to detect a laser point or laser line on the envelope surface of said tree trunk produced by an associated laser source 22. The camera units 21 and the laser sources 22 are preferably arranged in pairs, each pair comprising a camera unit 21 and an associated laser source 22. The camera unit and laser source pairs included in an individual measuring assembly 23 are distributed in the circumferential direction of a tree trunk 5 passing through the measuring field covered by said pairs so as to make it possible to detect the cross-sectional profile of the tree trunk 5. The respective camera unit 21 detects the reflection of the laser points or laser line produced on the envelope surface of the tree trunk by the associated laser source 22 and generates measuring values based on the detected reflection in a manner well known to a person skilled in the art. Based on the measuring values from the camera units 21 of an individual measuring assembly 23, it will be possible to establish the cross-sectional profile of the tree trunk by calculation models that are well known to a person skilled in the art. Based on the cross-sectional profile, it will be possible to establish information as to the diameter and the ovality of the tree trunk in a manner well known to a person skilled in the art.

The respective camera unit 21, or at least a lens included therein, and the associated laser source 22 are suitably mounted on a common holder 24. The holder 24 may be displaceably mounted to the harvesting arrangement 10 so as to allow the camera unit/lens and the associated laser source mounted on the holder to be displaced between an active measuring position and a passive rest position by displacement of the holder 24. When the camera units 21 and laser sources 22 are arranged on displaceable holders 24, it might be necessary to provide the harvesting arrangement with suitable calibration means for establishing the precise position of the respective laser source and camera unit/lens in relation to one or more fixed reference points on the harvesting arrangement when they have been displaced to the measuring position.

The harvesting arrangement 10 suitably comprises a measuring assembly for establishing measuring values related to the frontal end surface 6a of a log 6 to be formed from a tree trunk 5 held by the gripping members 11 of the harvesting arrangement, the storing means 32 being adapted to store information established based on the measuring values from said measuring assembly in a database. The above-indicated measuring assembly 23 shown in Fig 4 may be used for establishing measuring values related to the frontal end surface 6a of said log 6. In the latter case, the laser lines produced by the laser sources 22 of this measuring assembly 23 will sweep across the frontal end surface 6a when this frontal end surface 6a passes through the measuring field covered by this measuring assembly 23 as the tree trunk 5 is feed forward by the feeding means 13, and thereby make it possible for the associated camera units 21 to establish the desired measuring values related to this frontal end surface 6a. Alternatively, the harvesting arrangement 10 may be provided with a separate measuring assembly for detecting or digitally reproducing said end surface 6a, or where appropriate a part of this end surface. A possible design of such a measuring assembly and a holder for carrying and positioning thereof in relation to the other parts of the harvesting arrangement is described in WO 02/13597 A1. This measuring assembly may for instance comprise an image recording unit, such as a video camera or a scanner, for generation of a digital reproduction. The measuring assembly may also be based on so-called NIR-technique (NIR = "Near Infrared Spectroscopy"). The digital reproduction may be utilised in order to obtain, by image analysis and/or image processing, information concerning quality, size etc. of the log in question. Furthermore, calculations for percentual deduction for bark can be performed based on the reproduction, and rot damages, compression wood etc. can also be registered. Also cutting cracks can be registered by image analysis of the digital reproduction. If a scanner with the capability of catching near infrared wavelengths, but also other wavelengths and fluorescent light, is used for the detection, chemical properties of the log can also be registered, such as for instance moisture content, hard wood content, fiber content etc.

The tree harvester 1 may comprise processing means 31 for establishing information as to the diameter and/or ovality of a log 6 at the frontal end 6a thereof based on the measuring values from the last mentioned measuring assembly. The processing means 31 may also be adapted to establish information as to the wood surface profile of a log 6 based on the measuring values from the measuring assembly in question. The wood surface profile may be established in the manner described in WO 00/79213 A1. In this description and the subsequent claims, the expression "wood surface profile" refers to the part of the log end surface that consists of wood, i.e. with the bark deducted.

The harvesting arrangement 10 suitably comprises marking means, not shown, for applying an identification marking, e.g. in the form of a suitable code, on a log 6, by means of which the individual log 6 is associatable to the above-indicated stored information related to the log in question. Such an identification marking 40 is suitably applied on the frontal end surface 6a of the log, as illustrated in Fig 7, before the log is allowed to fall to the ground from the harvesting arrangement. The marking means may for instance be provided with a marking device of a type described in WO 99/23873 A1 or SE 520 289 C2. The marking 40 is suitably associated to established and stored information as to the growth location of the tree from which the log is obtained, for instance in a manner described in WO 99/23873 A1, so as to make it possible to determine the place of origin of a marked log with the aid of the marking. In connection with the felling, information concerning the place of origin, quality, size, seller, buyer etc. of the log can be stored associated to the marking 40, in which case such information can be obtained in connection with a later identification of the log. The marking 40 identifying the log can also be utilised in order to follow the movement of the log from the felling to the final customer.

It is illustrated in Fig 7 how a log 6 has been provided with a marking 40 consisting of a matrix of holes punched into the end surface of the log. The marking 40 has suitably also a reference mark 41 for enabling an adequate reading of the matrix. Any other suitable type of marking may of course also used as an alternative to the type of marking illustrated in Fig 7.

If the end surface 6a of a log is digitally reproduced, the end surface or a part thereof is suitably reproduced after the marking 40 have been applied on the end surface, whereby the reproduction will comprise also the marking.

In the example illustrated in Fig 8, the harvesting arrangement 10 is provided with a length measuring device 50 that comprises:
- at least one laser source 51, preferably in the form of a line laser, for producing a longitudinal laser line 52 on the envelope surface of at least the frontal part and in the longitudinal direction of a log 6 to be formed from a tree trunk 5 held by the gripping members 11 of the harvesting arrangement; and
- at least one camera unit 53, preferably in the form of a CCD camera, for establishing measuring values related to the length of said longitudinal laser line 52 on the envelope surface of said log.

In this case, the tree harvester 1 comprises processing means 31 for establishing information as to the length of said log 6 based on the measuring values from said camera unit 53, and storing means 32 for storing the established information as to the length of said log in a database.

The laser line 52 is to extend beyond the frontal end 56 of the tree trunk 5 held by the gripping members 11 of the harvesting arrangement. The camera unit 53 will only detect the part of the laser line 52 extending along the envelope surface of the tree trunk 5. The length of the laser line 52 on the envelope surface of the tree trunk and the corresponding length L1 of the part of the tree trunk covered by the laser line may be established by calculation models that are well known to a person skilled in the art. If the distance L2 from the cutting plane 54 of the cutting device 12 of the harvesting arrangement to the starting point 52a of the laser line on the envelope surface is known, it will be possible in an easy manner to calculate, based on this distance L2 and the above-indicated length L1, the entire length L of the log 6 to be formed when the cutting device cuts off the frontal part of a tree trunk 5. The length L may then be given by simply adding L1 and L2, i.e. L=L1+L2.

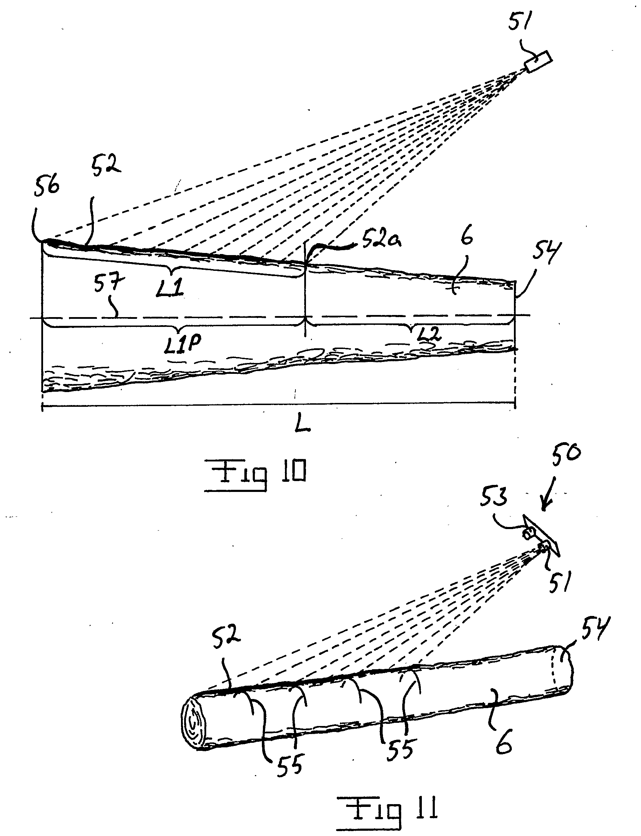

If so desired, the taper of the log 6 may also be taken into account in the establishment of the length L of the log in order to be able to establish the length L of the log along the pith ray 57 of the log, as schematically illustrated in Fig 10. In this case, the diameter of the log 6 has to be established at two or more measuring points along the log, for instance in the manner described above with reference to Figs 1-6. The length L1P along the pith ray 57 of the part of the log covered by the laser line 52 may then be established by trigonometry based on the length L1 along the envelope surface of the part of the log covered by the laser line 52. The entire length L of the log 6 along the pith ray 57 may then be given by simply adding L1P and L2, i.e. L= L1P+L2.

The laser source 51 and the camera unit 53 are suitably mounted to the part 10b of the harvesting arrangement that is fastened to the crane 3 of the tree harvester 1, as illustrated in Figs 3 and 8. In this case, the inclination angle between this part 10b of the harvesting arrangement and the part 10a of the harvesting arrangement in which the tree trunk 5 is held has to be established in order to be able to calculate the above-indicated length L1 based on measuring values from the camera unit 53. This inclination angle may be established with the aid on any suitable type of inclination sensor, such as for instance a gyro.

The laser source 51 of the length measuring device 50 may be arranged to produce one or more transverse laser lines 55 on the envelope surface of a tree trunk in the cross direction of the above-indicated longitudinal laser line 52, as illustrated in Fig 11. In this case, the camera unit 53 of the length measuring device may be adapted to establish measuring values based on the respective transverse laser line 55 on the envelope surface of the tree trunk and the processing means 31 may be adapted to establish information as to the diameter of a log to be formed from the tree trunk based on these measuring values from the camera unit 53.

The invention is of course not in any way restricted to the embodiments described above. On the contrary, many possibilities to modifications thereof will be apparent to a person with ordinary skill in the art without departing from the basic idea of the invention such as defined in the appended claims.

## Claims

1. A tree harvester comprising a harvesting arrangement (10), which harvesting arrangement (10) comprises gripping members (11) for holding a tree trunk, a cutting device (12) for cutting a tree trunk held by the gripping members into separate logs, and feeding means (13) for feeding a tree trunk held by the gripping members forward in the longitudinal direction of the tree trunk past the cutting device (12) so as to allow the cutting device to cut the tree trunk into separate logs, wherein:
- the harvesting arrangement (10) comprises measuring means (21, 22) for establishing a set of measuring values related to the cross-sectional shape of a log to be formed from the tree trunk, said set of measuring values comprising measuring values that are established simultaneously by the measuring means and that are related to the cross-sectional shape of said log at three or more different locations (P1, P2, P3) spaced apart as seen in the longitudinal direction of the log; the tree harvester comprises processing means (31) adapted to establish information as to the longitudinal curvature of said log based on said set of measuring values;
- the tree harvester comprises storing means (32) adapted to store the established information as to the longitudinal curvature of said log in a database;
- the measuring means comprises camera units for establishing said set of measuring values, wherein
each one of said locations (P1, P2, P3) is associated with a measuring assembly (23), each measuring assembly (23) comprising at least three camera units, preferably in the form of CCD cameras, which are arranged to view mutually different parts of the envelope surface of said log as seen in the circumferential direction thereof.

2. A tree harvester according to claim 1, **characterized in that** the processing means (31) is adapted to establish information as to the diameter of said log at each of said locations (P1, P2, P3) based on said set of measuring values, the storing means (32) being adapted to store the established information as to the diameter of said log in a database.

3. A tree harvester according to claim 1 or 2, **characterized in that** the processing means (31) is adapted to establish information as to the ovality of said log at each of said locations (P1, P2, P3) based on said set of measuring values, the storing means (32) being adapted to store the established information as to the ovality of said log in a database.

4. A tree harvester according to any of claims 1-3, **characterized in that** the measuring means (21, 22) is adapted to establish such sets of measuring values repeatedly as said log is fed forward by the feeding means (13).

5. A tree harvester according to claim 4, **characterized in that** the processing means (31) is adapted to establish the 3-dimensional shape of said log based on said sets of measuring values, the storing means (32) being adapted to store the established information as to the 3-dimensional shape of said log in a database.

6. A tree harvester according to any of claims 1-5, **characterized in that** each camera unit (21) is associated with at least one laser source (22), preferably in the form of a line laser, which is arranged to produce a laser point or laser line on a part of the envelope surface of said log viewed by the associated camera unit.

7. A tree harvester according to any of claims 1-6, **characterized in that** each measuring assembly (23) comprises at least three laser sources (22), preferably in the form of line lasers, for producing laser points or laser lines on mutually different parts of the envelope surface of said log as seen in the circumferential direction thereof, each one of said camera units (21) of the measuring assembly (23) being arranged to detect a laser point or laser line on the envelope surface of said log produced by an associated laser source of said at least three laser sources.

8. A tree harvester according to claim 7, **characterized in that** the respective camera unit (21), or at least a leans included therein, and the associated laser source (22) are mounted on a common holder (24).

9. A tree harvester according to claim 8, **characterized in that** the holder (24) is displaceably mounted to the harvesting arrangement (10) so as to allow the camera unit/lens and the associated laser source mounted on the holder to be displaced between an active measuring position and a passive rest position by displacement of the holder (24).

10. A tree harvester according to claim 1, **characterized in that**
the measuring assemblies (23) are spaced apart on the harvesting arrangement (10) as seen in the feeding direction of the feeding means (13).

11. A tree harvester according to any of claims 1-10 , **characterized in that** the harvesting arrangement (10) comprises a measuring assembly (23) for establishing measuring values related to an end surface of said log, and that the storing means (32) is adapted to store information established based on the measuring values from said measuring assembly (23) in a database.

12. A tree harvester according to claim 11, **characterized in that**
the tree harvester comprises processing means (31) for establishing information as to the diameter and/or ovality of said log at the end thereof based on the measuring values from said measuring assembly (23), the storing means (32) being adapted to store this information in a database.

13. A tree harvester according to claim 11 or 12, **characterized in that** the tree harvester comprises processing means (31) for establishing information as to the wood surface profile of said log based on the measuring values from said measuring assembly (23), the storing means (32) being adapted to store the established information as to the wood surface profile of the log in a database.

14. A tree harvester according to any of claims 1-13, **characterized in that** the harvesting arrangement (10) comprises marking means for applying an identification marking (40) on said log, by means of which the individual log is associatable to the stored information related to the log in question.

15. A tree harvester according to any of claims 1-14, **characterized in that** the harvesting arrangement (10) comprises a length measuring device (50) comprising at least one laser source (51), preferably in the form of a line laser, for producing a longitudinal laser line (52) on the envelope surface of at least the frontal part of said log in the longitudinal direction thereof, and at least one camera unit (53), preferably in the form of a CCD camera, for establishing measuring values related to the length of said longitudinal laser line (52) on the envelope surface of the log, and that the tree harvester (1) comprises processing means (31) for establishing information as to the length of said log based on the measuring values from said camera unit (53), the storing means (32) being adapted to store the established information as to the length of said log in a database.

16. A tree harvester according to claim 15, **characterized in:**
- **that** said laser source (51) of the length measuring device is arranged to produce one or more transverse laser lines (55) on the envelope surface of said log in the cross direction of said longitudinal laser line (52);
- **that** said camera unit (53) of the length measuring device is adapted to establishing measuring values related to the length of the respective transverse laser line (55) on the envelope surface of the log; and
- **that** the tree harvester comprises processing means (31) for establishing information as to the diameter of said log based on these measuring values from the camera unit (53) of the length measuring device, the storing means (32) being adapted to store the established information as to the diameter of said log in a database.

## Patentansprüche

1. Baumerntemaschine mit einer Ernteanordnung (10), wobei die Ernteanordnung (10) Greifelemente (11) zum Halten eines Baumstamms, eine Schneidvorrichtung (12) zum Schneiden eines von den Greifelementen gehaltenen Baumstamms in einzelne Holzstücke und eine Zufuhreinrichtung (13) zum Zuführen eines von den Greifelementen gehaltenen Baumstamms nach vorne in Längsrichtung des Baumstamms an der Schneidvorrichtung (12) vorbei aufweist, um zu ermöglichen, dass die Schneidvorrichtung den Baumstamm in einzelne Holzstücke schneidet, wobei
- die Ernteanordnung (10) eine Messeinrichtung (21, 22) aufweist zum Ermitteln eines Messwertsatzes, der mit der Querschnittsform eines Holzstücks in Beziehung steht, das aus dem Baumstamm gebildet werden soll, wobei der Messwertsatz Messwerte aufweist, die gleichzeitig von der Messeinrichtung ermittelt werden und mit der Querschnittsform des Holzstücks an drei oder mehr unterschiedlichen Stellen (P1, P2, P3) in Beziehung stehen, die in Längsrichtung des Holzstücks betrachtet, voneinander beabstandet sind;
- die Baumerntemaschine eine Verarbeitungseinrichtung (31) aufweist, die eingerichtet ist, Informationen über die Längskrümmung des Holzstücks auf der Basis des Messwertsatzes zu ermitteln;
- die Baumerntemaschine eine Speichereinrichtung (32) aufweist, die eingerichtet ist, die ermittelten Informationen über die Längskrümmung des Holzstücks in einer Datenbank zu speichern;
- die Messeinrichtung Kameraeinheiten (21) aufweist zum Ermitteln des Messwertsatzes, wobei jede der Stellen (P1, P2, P3) einer Messanordnung (23) zugeordnet ist, wobei jede Messanordnung (23) mindestens drei Kameraeinheiten aufweist, vorzugsweise in Form von CCD-Kameras, die so angeordnet sind, dass sie gegenseitig unterschiedliche Teile der Mantelfläche des Holzstücks, in dessen Umfangsrichtung gesehen, betrachten.

2. Baumerntemaschine nach Anspruch 1, **dadurch gekennzeichnet, dass** die Verarbeitungseinrichtung (31) dazu eingerichtet ist, Informationen über den Durchmesser des Holzstücks an jeder der Stellen (P1, P2, P3) auf der Basis des Messwertsatzes zu ermitteln, wobei die Speichereinrichtung (32) eingerichtet ist, die ermittelten Informationen über den Durchmesser des Holzstücks in einer Datenbank zu speichern.

3. Baumerntemaschine nach Anspruch 1 oder 2, **dadurch gekennzeichnet, dass** die Verarbeitungseinrichtung (31) eingerichtet ist, Informationen über die Ovalität des Holzstücks an jeder der Stellen (P1, P2, P3) auf der Basis des Messwertsatzes zu ermitteln, wobei die Speichereinrichtung (32) eingerichtet ist, die ermittelten Informationen über die Ovalität des Holzstücks in einer Datenbank zu speichern.

4. Baumerntemaschine nach einem der Ansprüche 1 bis 3, **dadurch gekennzeichnet, dass** die Messeinrichtung (21, 22) eingerichtet ist, solche Messwertsätze wiederholt zu ermitteln, wenn das Holzstück von der Zufuhreinrichtung (13) vorgeschoben wird.

5. Baumerntemaschine nach Anspruch 4, **dadurch gekennzeichnet, dass** die Verarbeitungseinrichtung (31) eingerichtet ist, die dreidimensionale Form des Holzstücks auf der Basis des Messwertsatzes zu ermitteln, wobei die Speichereinrichtung (32) eingerichtet ist, die ermittelten Informationen über die dreidimensionale Form des Holzstücks in einer Datenbank zu speichern.

6. Baumerntemaschine nach einem der Ansprüche 1 bis 5, **dadurch gekennzeichnet, dass** jede Kameraeinheit (21) mindestens einer Laserquelle (22) zugeordnet ist, vorzugsweise in der Form eines Linienlasers, welche angeordnet ist, um einen Laserpunkt oder eine Laserlinie auf einem Teil der Mantelfläche des Holzstücks, betrachtet von der zugeordneten Kameraeinheit, zu erzeugen.

7. Baumerntemaschine nach einem der Ansprüche 1 bis 6, **dadurch gekennzeichnet, dass** jede Messanordnung (23) mindestens drei Laserquellen (22) aufweist, vorzugsweise in der Form von Linienlasern, um Laserpunkte oder Laserlinien auf gegenseitig unterschiedlichen Teilen der Mantelfläche des Holzstücks, in Umfangsrichtung desselben gesehen, zu erzeugen, wobei jede der Kameraeinheiten (21) der Messanordnung (23) so angeordnet ist, dass sie einen Laserpunkt oder eine Laserlinie auf der Mantelfläche des Holzstücks detektiert, erzeugt durch eine zugeordnete Laserquelle der mindestens drei Laserquellen.

8. Baumerntemaschine nach Anspruch 7, **dadurch gekennzeichnet, dass** die entsprechende Kameraeinheit (21) oder zumindest eine darin enthaltene Linse und die zugeordnete Laserquelle (22) an einem gemeinsamen Halter (24) befestigt sind.

9. Baumerntemaschine nach Anspruch 8, **dadurch gekennzeichnet, dass** der Halter (24) an der Ernteanordnung (10) verschiebbar befestigt ist, so dass die Kameraeinheit/Linse und die zugeordneten Laserquelle, die an dem Halter befestigt ist, zwischen einer aktiven Messposition und einer passiven Ruheposition durch Verschieben des Halters (24) verschoben werden können.

10. Baumerntemaschine nach Anspruch 1, **dadurch gekennzeichnet, dass** die Messanordnungen (23) an der Ernteanordnung (10) beabstandet sind, betrachtet in Zufuhrrichtung der Zufuhreinrichtung (13).

11. Baumerntemaschine nach einem der Ansprüche 1 bis 10, **dadurch gekennzeichnet, dass** die Ernteanordnung (10) eine Messanordnung (23) aufweist zum Ermitteln von Messwerten, die sich auf eine Endfläche des Holzstücks beziehen und dass die Speichereinrichtung (32) eingerichtet ist, Informationen, die auf der Basis der Messwerte von der Messanordnung (23) ermittelt wurden, in einer Datenbank zu speichern.

12. Baumerntemaschine nach Anspruch 11, **dadurch gekennzeichnet, dass** die Baumerntemaschine eine Verarbeitungseinrichtung (31) aufweist zum Ermitteln von Informationen über den Durchmesser und/oder die Ovalität des Holzstücks an dessen Ende auf der Basis der Messwerte von der Messanordnung (23), wobei die Speichereinrichtung (32) eingerichtet ist, diese Informationen in einer Datenbank zu speichern.

13. Baumerntemaschine nach Anspruch 11 oder 12, **dadurch gekennzeichnet, dass** die Baumerntemaschine eine Verarbeitungseinrichtung (31) aufweist zum Ermitteln von Informationen über das Holzoberflächenprofil des Holzstücks auf der Basis der Messwerte von der Messanordnung (23), wobei die Speichereinrichtung (32) eingerichtet ist, die ermittelten Informationen über das Holzoberflächenprofil des Holzstücks in einer Datenbank zu speichern.

14. Baumerntemaschine nach einem der Ansprüche 1 bis 13, **dadurch gekennzeichnet, dass** die Ernteanordnung (10) eine Markierungseinrichtung aufweist zum Aufbringen einer Identifikationsmarkierung (40) auf den Holzstück, mittels welcher das einzelne Holzstück den gespeicherten Informationen, die sich auf das betreffenden Holzstück beziehen, zugeordnet werden kann.

15. Baumerntemaschine nach einem der Ansprüche 1 bis 14, **dadurch gekennzeichnet, dass** die Ernteanordnung (10) eine Längenmessvorrichtung (50) aufweist, umfassend mindestens eine Laserquelle (51), vorzugsweise in Form eines Linienlasers zum Herstellen einer Laserlängslinie (52) auf der Mantelfläche von zumindest dem vorderen Teil des Holzstücks in Längsrichtung desselben, und mindestens eine Kameraeinheit (53), vorzugsweise in Form einer CCD Kamera, zum Ermitteln von Messwerten, die sich auf die Länge der Laserlängslinie (52) auf der Mantelfläche des Holzstücks beziehen und dass die Baumerntemaschine (1) eine Verarbeitungseinrichtung (31) aufweist zum Ermitteln von Informationen über die Länge des Holzstücks auf der Basis der Messwerte von der Kameraeinheit (53), wobei die Speichereinrichtung (32) eingerichtet ist, die ermittelten Informationen über die Länge des Holzstücks in der Datenbank zu speichern.

16. Baumerntemaschine nach Anspruch 15, **dadurch gekennzeichnet**
- **dass** die Laserquelle (51) der Längenmessvorrichtung angeordnet ist, um eine oder mehr transversale Laserlinien (55) auf der Mantelfläche des Holzstücks in Querschnittsrichtung der Laserlängslinie (52) zu erzeugen;
- **dass** die Kameraeinheit (53) der Längenmessvorrichtung eingerichtet ist, Messwerte zu ermitteln, die sich auf die Länge der jeweiligen transversalen Laserlinie (55) auf der Mantelfläche des Holzstücks beziehen; und
- **dass** die Baumerntemaschine eine Verarbeitungseinrichtung (31) aufweist zum Ermitteln von Informationen über den Durchmesser des Holzstücks auf der Basis dieser Messwerte von der Kameraeinheit (53) der Längenmessvorrichtung, wobei die Speichereinrichtung (32) eingerichtet ist, die ermittelten Informationen über den Durchmesser des Holzstücks in einer Datenbank zu speichern.

## Revendications

1. Abatteuse d'arbres comprenant un agencement d'abattage (10),
lequel agencement d'abattage (10) comprend des éléments de préhension (11) pour maintenir un tronc d'arbre, un dispositif de coupe (12) pour couper un tronc d'arbre maintenu par les éléments de préhension en grumes distinctes, et des moyens d'alimentation (13) pour une alimentation en tronc d'arbre par les éléments de préhension vers l'avant dans le sens longitudinal du tronc d'arbre au-delà du dispositif de coupe (12) de manière à permettre au dispositif de coupe de couper le tronc d'arbre en grumes distinctes, dans lequel :
- l'agencement d'abattage (10) comprend des moyens de mesure (21, 22) pour établir un ensemble de valeurs de mesures liées à la forme en coupe transversale d'une grume à former à partir du tronc d'arbre, ledit ensemble de valeurs de mesures comprenant des valeurs de mesures qui sont établies simultanément par les moyens de mesure et qui sont liées à la forme en coupe transversale de ladite grume au niveau de trois emplacements ou plus différents (P1, P2, P3) espacés, tels que vus dans le sens longitudinal de la grume ;
- l'abatteuse d'arbre comprend des moyens de traitement (31) adaptés pour établir des informations sur la courbure longitudinale de ladite grume sur la base dudit ensemble de valeurs de mesures ;
- l'abatteuse d'arbre comprend des moyens de stockage (32) adaptés pour stocker les informations établies sur la courbure longitudinale de ladite grume dans une base de données ;
- les moyens de mesure comprennent des unités de caméra (21) pour établir ledit ensemble de valeurs de mesure, dans lesquelles
chacun desdits emplacements (P1, P2, P3) est associé à un ensemble de mesure (23), chaque ensemble de mesure (23) comprenant au moins trois unités de caméra, de préférence sous la forme de caméras CCD, qui sont agencées pour visualiser les différents parties de la surface de l'enveloppe de ladite grume telles que vues dans le sens circonférentiel de celle-ci.

2. Abatteuse d'arbres selon la revendication 1, **caractérisée en ce que** les moyens de traitement (31) sont adaptés pour établir des informations sur le diamètre de ladite grume au niveau de chacun desdits emplacements (P1, P2, P3) sur la base dudit ensemble de valeurs de mesures, les moyens de stockage (32) étant adaptés pour stocker les informations établies sur le diamètre de ladite grume dans une base de données.

3. Abatteuse d'arbres selon la revendication 1 ou 2, **caractérisée en ce que** les moyens de traitement (31) sont adaptés pour établir des informations sur l'ovalité de ladite grume au niveau de chacun desdits emplacements (P1, P2, P3) sur la base dudit ensemble de valeurs de mesure, les moyens de stockage (32) étant adaptés pour stocker les informations établies sur l'ovalité de ladite grume dans une base de données.

4. Abatteuse d'arbres selon l'une quelconque des revendications 1 à 3, **caractérisée en ce que** les moyens de mesure (21, 22) sont adaptés pour établir de tels ensembles de valeurs de mesures à plusieurs reprises, dans la mesure où ladite grume est alimentée vers l'avant par les moyens d'alimentation (13).

5. Abatteuse d'arbres selon la revendication 4, **caractérisée en ce que** les moyens de traitement (31) sont adaptés pour établir la forme en 3 dimensions de ladite grume sur la base desdits ensembles de valeurs de mesure, les moyens de stockage (32) étant adaptés pour stocker les informations établies sur la forme en 3 dimensions de ladite grume dans une base de données.

6. Abatteuse d'arbres selon l'une quelconque des revendications 1 à 5, **caractérisée en ce que** chaque unité de caméra (21) est associée à au moins une source de laser (22), de préférence sous la forme d'un laser en ligne, qui est agencé pour produire un point de laser ou une ligne de laser sur une partie de la surface de l'enveloppe de ladite grume vue par l'unité de caméra associée.

7. Abatteuse d'arbres selon l'une quelconque des revendications 1 à 6, **caractérisée en ce que** chaque ensemble de mesure (23) comprend au moins trois sources laser (22), de préférence sous la forme de lasers en ligne, permettant de produire des points de laser ou des lignes de laser sur des parties mutuellement différentes de la surface de l'enveloppe de ladite grume telle que vue dans le sens circonférentiel de celle-ci, chacune desdites unités de caméra (21) de l'ensemble de mesure (23) étant agencée pour détecter un point de laser ou une ligne de laser sur la surface d'enveloppe de ladite grume produit par une source laser associée parmi lesdites au moins trois sources laser.

8. Abatteuse d'arbres selon la revendication 7, **caractérisée en ce que** l'unité de caméra respective (21), ou au moins une lentille incluse dans celle-ci, et la source laser associée (22) sont montées sur un support commun (24).

9. Abatteuse d'arbres selon la revendication 8, **caractérisée en ce que** le support (24) est monté de manière à pouvoir être déplacé sur l'agencement d'abattage (10) de manière à permettre à l'unité de caméra / lentille et à la source laser associée montée sur le support d'être déplacées entre une position de mesure active et une position de repos passive par déplacement du support (24).

10. Abatteuse d'arbres selon la revendication 1,
**caractérisée en ce que** les ensembles de mesure (23) sont espacés sur l'agencement d'abattage (10) tels que vu dans le sens d'alimentation du moyen d'alimentation (13).

11. Abatteuse d'arbres selon l'une des revendications 1 à 10
**caractérisée en ce que** l'agencement d'abattage (10) comprend un ensemble de mesure (23) pour établir des valeurs de mesures liées à une surface d'extrémité de ladite grume et **en ce que** les moyens de stockage (32) sont adaptés pour stocker des informations établies sur la base desdites valeurs de mesures provenant de l'ensemble de mesure (23) dans une base de données.

12. Abatteuse d'arbres selon la revendication 11,
**caractérisée en ce que** l'abatteuse d'arbres comprend des moyens de traitement (31) pour établir des informations sur le diamètre et / ou l'ovalité de ladite grume au niveau de l'extrémité de celle-ci sur la base des valeurs de mesures dudit ensemble de mesure (23), les moyens de stockage (32) étant adaptés pour stocker ces informations dans une base de données.

13. Abatteuse d'arbres selon la revendication 11 ou 12,
**caractérisée en ce que** l'abatteuse d'arbres comprend des moyens de traitement (31) pour établir des informations sur le profil de surface du bois de ladite grume sur la base des valeurs de mesures dudit ensemble de mesure (23), les moyens de stockage (32) étant adaptés pour stocker les informations établies sur le profil de surface de bois de la grume dans une base de données.

14. Abatteuse d'arbres selon l'une des revendications 1 à 13,
**caractérisée en ce que** l'agencement d'abattage (10) comprend des moyens de marquage pour appliquer un marquage d'identification (40) sur ladite grume, au moyen duquel la grume individuelle peut être associée aux informations stockées liées à la grume en question.

15. Abatteuse d'arbres selon l'une des revendications 1 à 14,
**caractérisée en ce que** l'agencement d'abattage (10) comprend un dispositif de mesure de longueur (50) comprenant au moins une source laser (51), de préférence sous la forme d'un laser en ligne, pour produire une ligne de laser longitudinale (52) sur la surface de l'enveloppe d'au moins la partie frontale de ladite grume dans la direction longitudinale de celle-ci et au moins une unité de caméra (53), de préférence sous la forme d'une caméra CCD, pour établir des valeurs de mesures liées à la longueur de ladite ligne de laser longitudinale (52) sur la surface de l'enveloppe de la grume et **en ce que** l'abatteuse d'arbres (1) comprend des moyens de traitement (31) pour établir des informations sur la longueur de ladite grume sur la base des valeurs de mesures de ladite unité de caméra (53), les moyens de stockage (32) étant adaptés pour stocker les informations établies sur la longueur de ladite grume dans une base de données.

16. Abatteuse d'arbres selon la revendication 15, **caractérisée:**
- **en ce que** ladite source laser (51) du dispositif de mesure de longueur est agencée pour produire une ou plusieurs lignes de laser transversales (55) sur la surface de l'enveloppe de ladite grume dans la direction transversale de ladite ligne de laser longitudinale (52) ;
- **en ce que** ladite unité de caméra (53) du dispositif de mesure de longueur est adaptée pour établir des valeurs de mesures liées à la longueur de la ligne de laser transversale respective (55) sur la surface de l'enveloppe de la grume ; et
- **en ce que** l'abatteuse d'arbre comprend des moyens de traitement (31) pour établir des informations sur le diamètre de ladite grume sur la base de ces valeurs de mesures provenant de l'unité de caméra (53) du dispositif de mesure de longueur, les moyens de stockage (32) étant adaptés pour stocker les informations établies sur le diamètre de ladite grume dans une base de données.
